# EUROPÄISCHE PATENTSCHRIFT

(11) **EP 1 429 891 B1**
(45) Veröffentlichungstag und Bekanntmachung des Hinweises auf die Patenterteilung: **17.06.2009**
(21) Anmeldenummer: 02758099.2
(22) Anmeldetag: 16.07.2002
(51) Int. Cl.: B23Q 11/00, B25H 3/00, B24B 55/10, B23D 59/00

(54) **HANDWERKZEUGMASCHINE MIT STAUBBOX**
HAND-HELD MACHINE TOOL COMPRISING A DUST BOX
MACHINE-OUTIL DOTEE D'UN COMPARTIMENT A POUSSIERE

(30) Priorität: 15.09.2001 DE 10145583
(43) Veröffentlichungstag der Anmeldung: 23.06.2004
(73) Patentinhaber: ROBERT BOSCH GMBH, 70442 Stuttgart (DE)
(72) Erfinder: WUENSCH, Steffen, 71088 Holzgerlingen (DE)
(86) Internationale Anmeldenummer: PCT/DE2002/002597
(87) Internationale Veröffentlichungsnummer: WO 2003/026841

(56) Entgegenhaltungen:
- EP-A- 0 371 236
- DE-A- 3 921 125

## Beschreibung

### Stand der Technik

Die Erfindung geht aus von einer Handwerkzeugmaschine nach der Gattung des Anspruchs 1.

Aus der GB 2,343,393 ist eine Handwerkzeugmaschine mit einer Staubbox gemäß dem Oberbegriff des Anspruch 1 bekannt, die eine Staubabsaugung mit hohem Wirkungsgrad bei gleichzeitig minimaler Feinstaubemission ermöglicht.

Die Absaugung der bekannten Handwerkzeugmaschine arbeitet mit einem mit dem Antriebsmotor der Handwerkzeugmaschine drehenden Ventilator, dessen Absaugleistung begrenzt ist.

Für eine Erhöhung der Absaugleistung ist das Staubaustrittsrohr der Handwerkzeugmaschine mit dem Absaugschlauch eines Staubsaugers koppelbar. Damit ist bei Betreiben des gekoppelten Staubsaugers und gleichzeitigem Schleifen die Absaugwirkung und die Schleifleistung erheblich verstärkt.

Es ist verhältnismäßig umständlich, einen geeigneten Staubsauger ständig dann zur Hand zu haben, wenn mit der Handwerkzeugmaschine Extremfälle anliegen.

### Vorteile der Erfindung

Die erfindungsgemäße Handwerkzeugmaschine mit den Merkmalen des Anspruchs 1 hat den Vorteil, daß mit dem Werkzeugkoffer zum Aufbewahren der Handwerkzeugmaschine stets ein Staubsauger mitgeführt wird, der mit einer externen oder internen Spannungsquelle verbindbar ist und der die Absaugleistung der Handwerkzeugmaschine und damit ihren Wirkungsgrad verbessert.

Dadurch, daß die Staubabsaugeinheit überrastbar, insbesondere mittels Halterippen, im Werkzeugkoffer befestigbar ist, ist sie einfach entnehmbar und von Staub entsorgbar sowie unmittelbar - ohne Absaugschlauch - mit der Handwerkzeugmaschine kuppelbar.

Dadurch, daß die Staubbox eine luftdurchlässige, aber staubundurchlässige Außenwand mit Mikrofilter aufweist, ist der Wirkungsgrad der Staubabsaugeinrichtung hoch und die Feinstaubemission gering.

Dadurch, daß die Staubbox einen luftdichten Deckel hat, ist der Schleifstaub sicher sammelbar und bequem entsorgbar.

Dadurch, daß der Werkzeugkoffer Mittel enthält, auf die der Absaugschlauch aufrollbar ist, kann ein verhältnismäßig langer Staubabsaugschlauch platzsparend und gut zugänglich aufbewahrt mitgeführt werden.

Dadurch, daß die Leistung des Motors, die Dimensionierung des Ventilators und des Absaugschlauches abgestimmt auf die zur Aufbewahrung im Werkzeugkoffer vorgesehene Handwerkzeugmaschine ist, kann die Absaugeinheit aufgrund des hohen Wirkungsgrades sehr kompakt und leicht gebaut werden.

Dadurch, daß der Werkzeugkoffer ein selbst aufrollendes elektrisches Anschlußkabel enthält, kann die Handwerkzeugmaschine auch bei weit entfernt liegenden Steckdosen bequem betrieben werden.

Dadurch, daß die Staubabsaugeinheit und die in den Werkzeugkoffer integrierte Steckdose unabhängig voneinander mit separaten Schaltern vom Netz trennbar sind, sind die Handwerkzeugmaschine und die Staubabsaugeinheit schnell und sicher vom Netz trennbar.

Dadurch, daß der Staubsammelraum der Staubabsaugeinheit ein separat entnehmbarer Container ist, läßt sich der anfallende Schleifstaub bequem entsorgen.

Dadurch, daß die entnehmbare Staubbox auch unmittelbar mit der Handwerkzeugmaschine kuppelbar ist, insbesondere an deren Staubaustrittsrohr, wird der anfallende Schleifstaub auch dann sicher aufgefangen, wenn Arbeitsfälle vorliegen, bei denen die Verwendung eines Absaugschlauchs stören würde.

Dadurch, daß der Werkzeugkoffer ein integriertes Ladegerät enthält, können auch akkubetriebene Handwerkzeugmaschinen bzw. Ersatzakkus komfortabel in dem Werkzeugkoffer mitgeführt und eingesetzt werden.

Dadurch, daß der Werkzeugkoffer Mittel aufweist, mit denen er an die Decke bzw. an die Wand hängbar ist, kann er bestimmungsgemäß auch für Arbeitsfälle eingesetzt werden, bei denen er nicht auf dem Fußboden stehen soll oder kann.

### Zeichnung

Nachstehend ist die Erfindung anhand eines Ausführungsbeispiels mit zugehöriger Zeichnung erläutert.

Es zeigen
Figur 1 einen Längsschnitt der Handwerkzeugmaschine mit Absaugschlauch,
Figur 2 eine Draufsicht auf den geöffneten Koffer mit Handwerkzeugmaschine und Staubabsaugeinheit (Ausschnitt),
Figur 3 eine vollständige Ansicht des geöffneten Werkzeugkoffers mit Handwerkzeugmaschine, Staubabsaugeinheit und Kabelrolle und
Figur 4 eine Ansicht der Schmalseite des Werkzeugkoffers von vorne mit einer Schlauchaufrolleinheit.

### Beschreibung des Ausführungsbeispieles

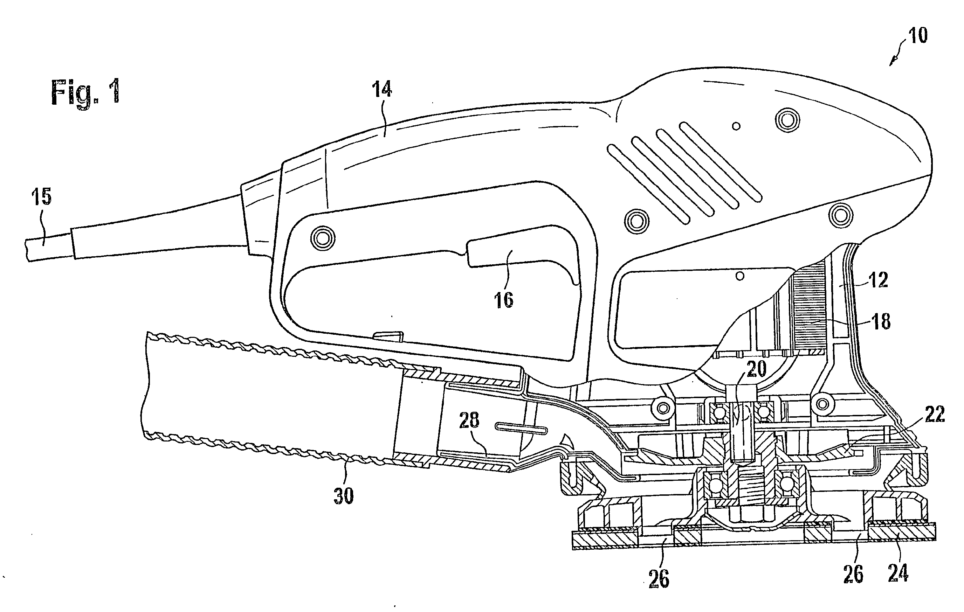

Die in Figur 1 gezeigte Handwerkzeugmaschine 10 ist ein Exzenterschleifer mit einem Gehäuse 12, das in Betrachtungsrichtung links einen Handgriff 14 trägt, der an seinem freien Ende eine Elektro-Anschlußleitung 15 und in Betrachtungsrichtung unten eine Taste 16 eines nicht näher erläuterten Ein- und Aus-Schalters trägt.

Im Inneren des Gehäuses 12 sitzt ein Motor 18 mit einer Motorwelle 20, die an ihrem unteren freien Ende einen Absaugventilator 22 trägt und drehmitnehmend mit einem Schleifteller 24 verbunden ist.

Der Schleifteller 24 ist von Absauglöchern 26 durchsetzt. Durch diese ist anfallender Schleifstaub von einem nicht dargestellten Werkstück absaugbar und anschließend vom Luftstrom des Absaugventilators 22 durch ein Staubabfuhrrohr 28 abtransportierbar. Das Staubabfuhrrohr 28 ist mit einem Absaugschlauch 30 kuppelbar, der an eine externe Staubabsaugeinheit 31 anschließbar ist.

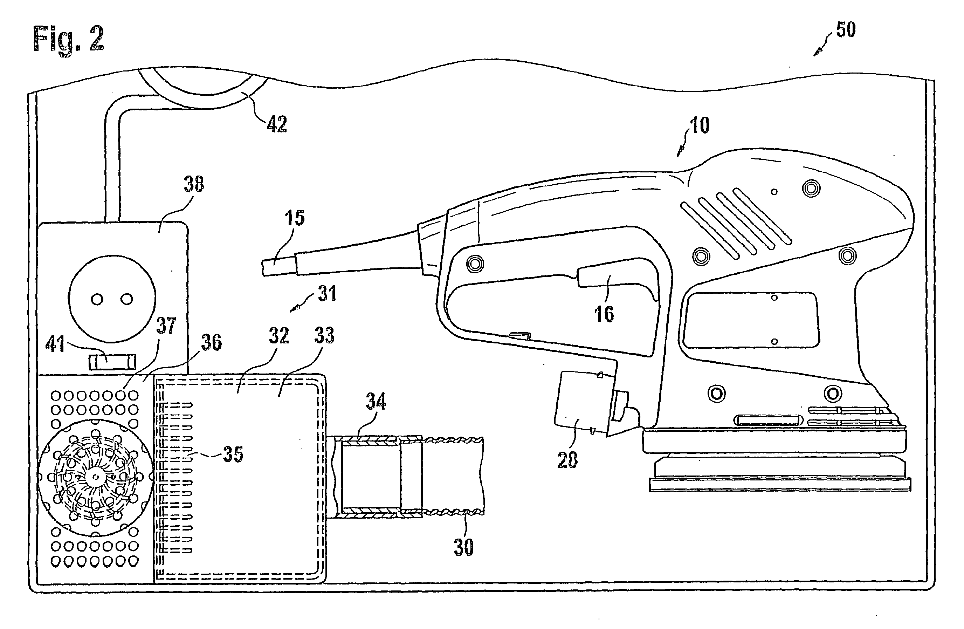

Figur 2 zeigt einen Teilausschnitt eines Werkzeugkoffers 50, in dem die Handwerkzeugmaschine 10 transportsicher gelagert ist. Auf die Einzelheiten der Handwerkzeugmaschine 10 soll hier nicht nochmals eingegangen werden, da diese zu Figur 1 bereits ausführlich beschrieben sind.

In der in Betrachtungsrichtung linken unteren Ecke des Werkzeugkoffers 50 ist die externe Staubabsaugeinheit 31 unverlierbar mittels nicht näher bezeichneter Rippen verrastbar lösbar angeordnet. Die Staubabsaugeinheit 31 setzt sich aus einer Staubbox 32 mit Gebläsebox 36 zusammen. Die Staubbox 32 trägt einen in Betrachtungsrichtung nach rechts weisenden Einblasstutzen 34, der sowohl mit dem Ende eines Absaugschlauches 30 als auch ummittelbar mit dem Staubabfuhrrohr 28 der Handwerkzeugmaschine 10 kuppelbar ist.

Die Staubbox 32 trägt oben einen abnehmbaren, staubdichten Deckel 33 und geht in die Gebläsebox 36 über, die oben mit einem gelochten Motordeckel 37 verschließbar ist. Der Motordeckel 37 ist erst dann abnehmbar, wenn zuvor der Deckel 33 der Staubbox 32 abgenommen wurde. Er trägt auf seiner senkrecht nach unten abgewinkelten Seite, die die Rückwand der Staubbox 32 bildet, einen Mikrofilter 35. Dieser ist luftdurchlässig aber staubdicht und überdeckt bzw. verschließt Durchbrüche der abgewinkelten Fläche.

In Betrachtungsrichtung nach oben ist benachbart zur Staubabsaugeinheit 31 eine Steckdose 38 angeordnet, die über eine elektrische Anschlußleitung 42 mit einer nicht näher bezeichneten Spannungsquelle verbindbar ist.

Die Steckdose 38 trägt auf ihrer Oberseite eine Schalttaste 41, mit der eine von der Steckdose 38 zur Gebläsebox 36 führende Elektroverbindung unterbrochen bzw. geschlossen werden kann.

Die Staubabsaugeinheit 31 ist überrastbar im Werkzeugkoffer 50 gehaltert und aus diesem entnehmbar, um unmittelbar mit dem Staubabfuhrrohr 28 der Handwerkzeugmaschine 10 gekuppelt zu werden.

Ist die Staubabsaugeinheit 31 über den Absaugschlauch 30 mit dem Staubabfuhrrohr 28 der Handwerkzeugmaschine 10 gekuppelt und beim Schleifen eingeschaltet, wird die Staubabtransportleistung und damit auch die Schleifleistung der Handwerkzeugmaschine 10 deutlich verstärkt.

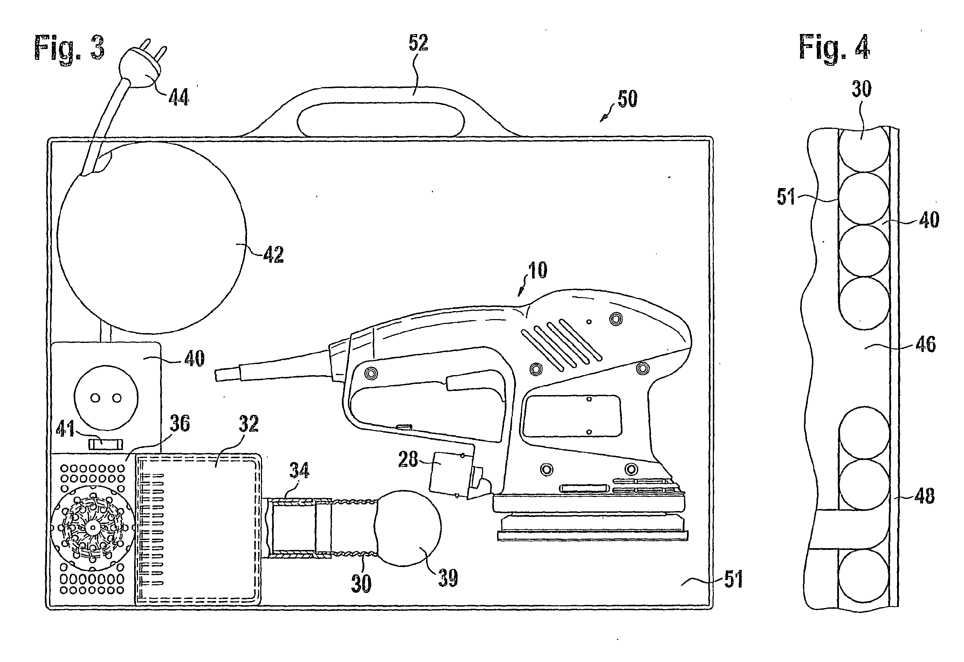

Figur 3 zeigt die Gesamtansicht des Werkzeugkoffers 50 mit einem im oberen Bereich angeordneten Traggriff 52 und einer Kabelrolle 420, die ein elektrisches Verlängerungskabel 42 bequem ein- und ausrollbar schnell verfügbar hält.

Der zur Zeichenebene parallele Boden 51 des Werkzeugkoffers 50 weist einen Durchbruch 39 auf zum knieartig abgewinkelten Durchtritt des Absaugschlauchs 30 nach außen.

Figur 4 zeigt eine Ansicht der linken Seite des Werkzeugkoffers 50 gemäß Figur 3, wobei die vom Kofferboden 51 getragene parallele, axial beabstandete Aufrollplatte 48 erkennbar ist, die über eine mittige Aufrollnabe 46 mit dem Kofferboden 51 verbunden ist.

Im Zwischenraum zwischen Aufrollplatte 48 und Kofferboden 51 ist der Absaugschlauch 30 bequem und platzsparend, schnell verfügbar aufgerollt aufzubewahren.

## Patentansprüche

1. Handwerkzeugmaschine (10) zur Bearbeitung von Werkstücken mit einem Gehäuse (12), das mit einem Absaugschlauch (30) und/oder mit einer Staubbox (32) kuppelbar ist, mit einem zuordenbaren Werkzeugkoffer (50), **dadurch gekennzeichnet, daß** der Werkzeugkoffer (50) eine Staubabsaugeinheit (31) enthält, die einen Absaugmotor (54) mit Absaugventilator (56) und einen Staubsammelraum aufweist, wobei die Staubabsaugeinheit (31) platzsparend in die Innenkontur des Werkzeugkoffers (50) integriert ist, wobei die Leistung des Absaugmotors (54), die Dimensionierung des Ventilators (56) und des Absaugschlauches (30) auf die zur Aufbewahrung im Werkzeugkoffer vorgesehene Handwerkzeugmaschine (10) abgestimmt ist.

2. Handwerkzeugmaschine nach Anspruch 1, **dadurch gekennzeichnet, daß** der Werkzeugkoffer (50) eine integrierte Steckdose (38) und ein Netzanschlußkabel (42), insbesondere in Gestalt einer Kabelrolle, aufweist.

3. Handwerkzeugmaschine nach Anspruch 1, **dadurch gekennzeichnet, daß** die Staubabsaugeinheit (31) unverlierbar, entnehmbar am Werkzeugkoffer angeordnet ist.

4. Handwerkzeugmaschine nach Anspruch 2, **dadurch gekennzeichnet, daß** die Staubabsaugeinheit mit einem Deckel (37) verschließbar ist, der einen Mikrofilter (35) trägt.

5. Handwerkzeugmaschine nach Anspruch 3, **dadurch gekennzeichnet, daß** der Werkzeugkoffer (50) den Absaugschlauch (30) spulenartig aufrollbar trägt, wobei dieser im Inneren des Werkzeugkoffers (50) lösbar mit der Staubsaugeinheit (31) kuppelbar ist.

6. Handwerkzeugmaschine nach einem der vorhergehenden Ansprüche, **dadurch gekennzeichnet, daß** das elektrische Anschlußkabel (15) zur Stromversorgung der Staubabsaugeinheit (31) und der Handwerkzeugmaschine (10) von einer Kabelrolle (42) getragen wird, die integrierter Teil des Werkzeugkoffers (50) ist.

7. Handwerkzeugmaschine nach einem der vorhergehenden Ansprüche, **dadurch gekennzeichnet, daß** die Staubabsaugeinheit (31) und die Steckdose (38) über eine Schalttaste (41) als Teil eines elektrischen Schalters vom Strom-Netz trennbar sind.

8. Handwerkzeugmaschine (10) nach einem der vorhergehenden Ansprüche, **dadurch gekennzeichnet, daß** der Werkzeugkoffer (50) ein integriertes Akku-Ladegerät und Stauraum zur Aufnahme von mindestens einem Akku aufweist.

9. Handwerkzeugmaschine (10) nach einem der vorhergehenden Ansprüche, **dadurch gekennzeichnet, daß** der Werkzeugkoffer Mittel aufweist, mittels derer er aufhängbar ist, insbesondere an der Decke oder Wand.

## Claims

1. Handheld machine tool (10) for machining of work pieces having a housing (12) which can be coupled to a suction hose (30) and/or to a dust box (32) having a toolbox (50) which can be associated with it, **characterized in that** the toolbox (50) contains a dust suction unit (31) which has a suction motor (54) with a suction fan (56) and a dust collecting area, with the dust suction unit (31) being integrated in a space-saving manner in the internal contour of the toolbox (50) with the power of the suction motor (54), the size of the fan (56) and of the suction hose (30) being matched to the handheld machine tool (10) which is intended to be stored in the toolbox.

2. Handheld machine tool according to Claim 1, **characterized in that** the toolbox (50) has an integrated plug socket (38) and a mains connecting cable (42), in particular in the form of a cable reel.

3. Handheld machine tool according to Claim 1, **characterized in that** the dust suction unit (31) is arranged in a captive manner, removeably on the toolbox.

4. Handheld machine tool according to Claim 2, **characterized in that** the dust suction unit can be closed with a cover (37) which is fitted with a microfilter (35).

5. Handheld machine tool according to Claim 3, **characterized in that** the toolbox (50) is fitted with the suction hose (30) such that the latter can be rolled up like a coil, in which case this suction hose (30) can be detachably coupled to the dust suction unit (31) in the interior of the toolbox (50).

6. Handheld machine tool according to one of the preceding claims, **characterized in that** the electrical connecting cable (15) for supplying electrical power to the dust suction unit (31) and the handheld machine tool (10) is supported by a cable reel (42) which is an integrated part of the toolbox (50).

7. Handheld machine tool according to one of the preceding claims, **characterized in that** the dust suction unit (31) and the plug socket (38) can be disconnected from the mains electrical system via a switching key (41), as part of an electrical switch.

8. Handheld machine tool (10) according to one of the preceding claims, **characterized in that** the toolbox (50) has an integrated rechargeable-battery charger and a stowage area for holding at least one rechargeable battery.

9. Handheld machine tool (10) according to one of the preceding claims, **characterized in that** the toolbox has means by means of which it can be suspended, in particular on the ceiling or wall.

## Revendications

1. Machine-outil manuelle (10) destinée à l'usinage de pièces, comprenant un boîtier (12) qui peut être accouplé à un tuyau d'aspiration (30) et/ou un compartiment à poussière (32), et comprenant un coffre à outils (50) pouvant être associé, **caractérisée en ce que** le coffre à outils (50) contient une unité d'aspiration de poussière (31) qui présente un moteur d'aspiration (54) avec un ventilateur d'aspiration (56) et un espace de collecte de la poussière, l'unité d'aspiration de poussière (31) étant intégrée de manière compacte dans le contour interne du coffre à outils (50), la puissance du moteur d'aspiration (54) et le dimensionnement du ventilateur (56) et du tuyau d'aspiration (30) étant adaptés à la machine-outil manuelle (10) prévue pour être rangée dans le coffre à outils.

2. Machine-outil manuelle selon la revendication 1, **caractérisée en ce que** le coffre à outils (50) présente une prise électrique intégrée (38) et un câble de raccordement au réseau (42), notamment sous forme de rouleau de câble.

3. Machine-outil manuelle selon la revendication 1, **caractérisée en ce que** l'unité d'aspiration de poussière (31) est disposée de manière imperdable, de manière à pouvoir être enlevée du coffre à outils.

4. Machine-outil manuelle selon la revendication 2, **caractérisée en ce que** l'unité d'aspiration de poussière peut être fermée avec un couvercle (37) qui porte un microfiltre (35).

5. Machine-outil manuelle selon la revendication 3, **caractérisée en ce que** le coffre à outils (50) porte le tuyau d'aspiration (30) sous forme bobinée, celui-ci pouvant être accouplé de manière détachable à l'unité d'aspiration de poussière (31) à l'intérieur du coffre à outils (50).

6. Machine-outil manuelle selon l'une quelconque des revendications précédentes, **caractérisée en ce que** le câble de raccordement électrique (15) pour l'alimentation de l'unité d'aspiration de poussière (31) et de la machine-outil manuelle (10) est porté par un rouleau de câble (42) qui fait partie intégrante du coffre à outils (50).

7. Machine-outil manuelle selon l'une quelconque des revendications précédentes, **caractérisée en ce que** l'unité d'aspiration de poussière (31) et la prise électrique (38) peuvent être séparées du réseau électrique par le biais d'un bouton de commutation (41) faisant partie d'un commutateur électrique.

8. Machine-outil manuelle (10) selon l'une quelconque des revendications précédentes, **caractérisée en ce que** le coffre à outils (50) présente un appareil de charge à accumulateur intégré et un espace de rangement pour recevoir au moins un accumulateur.

9. Machine-outil manuelle (10) selon l'une quelconque des revendications précédentes, **caractérisée en ce que** le coffre à outils présente des moyens à l'aide desquels il peut être accroché, notamment au plafond ou à un mur.
